# EUROPÄISCHE PATENTSCHRIFT

(11) **EP 2 130 886 B1**
(45) Veröffentlichungstag und Bekanntmachung des Hinweises auf die Patenterteilung: **11.03.2015**
(21) Anmeldenummer: 09160661.6
(22) Anmeldetag: 19.05.2009
(51) Int. Cl.: C09J 7/02, C09J 105/00, B65H 19/10

(54) **Klebeband für den fliegenden Rollenwechsel**
Flying splice adhesive tape
Ruban adhésif de raccordement volant

(30) Priorität: 03.06.2008 DE 102008026443; 27.11.2008 DE 102008059381; 03.06.2008 DE 102008026447; 03.06.2008 DE 102008026448
(43) Veröffentlichungstag der Anmeldung: 09.12.2009
(73) Patentinhaber: TESA SE, 20253 Hamburg (DE)
(72) Erfinder: Nagel, Christoph, 22417, Hamburg (DE); Götz, Kerstin, 22547, Hamburg (DE)

(56) Entgegenhaltungen:
- EP-A1- 2 116 581
- EP-A2- 1 076 026
- US-B1- 6 432 241

## Beschreibung

Die Erfindung betrifft ein Klebeband für den fliegenden Rollenwechsel von auf Rollen aufgewickeltem Flachbahnmaterial gemäß den Merkmalen des Oberbegriffs des Hauptanspruchs sowie ein Verfahren für den fliegenden Rollenwechsel von auf Rollen aufgewickeltem Flachbahnmaterial.

Bei der Verarbeitung von Flachbahnmaterial (Papier, Folien, Vliese oder dergleichen) ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig (Haft-)Klebebänder zum Einsatz, um das Ende der alten Bahn mit dem Anfang der neuen Bahn zu verbinden (zu "splicen" oder zu "spleißen", das Verfahren wird auch als "Spliceverfahren" oder "Spleißverfahren" bezeichnet).

Seit Jahren sind dabei Klebebänder bekannt, die in gerader Linie unter oder auf die oberste Lage der neuen Rolle verklebt werden und so die Funktion des Rollenverschlusses sowie die des Splice-Klebebands (Klebeband, das die neue Flachbahn (insbesondere eine Papierbahn) mit der alten, auslaufenden Flachbahn verbindet) in sich vereinigen.

Während des Splice-Vorganges muss der Rollenverschluss öffnen, um ein Anbinden der neuen Flachbahn an den Endbereich der auslaufenden Flachbahn zu ermöglichen, so dass nach dem Splice-Prozess die neue Flachbahn in kontinuierlicher Prozessführung von der neuen Rolle abläuft.

Die US 5,323,981 A offenbart ein zweiseitiges Klebeband, das auf der Außenseite eine hochtackige Klebmasse für den fliegenden Rollenwechsel aufweist. Auf der Rückseite sind zwei Klebmassen positioniert, die vorteilhafterweise eine klebmassenfreie Zone zwischen den Klebmassen aufweist. Dabei wird die hintere Klebmasse, die permanent klebend ist, auf die oberste Lage der neuen Rolle verklebt und die vordere Klebmasse, die repositionierbar ist über die oberste Lage auf die zweite Lage verklebt. Die repositionierbare Klebmasse erfüllt bei dieser Variante die Aufgabe des Rollenverschlusses. Im Falle des fliegenden Rollenwechsels kommt es zum Kontakt der ablaufenden Bahn mit der neuen Rolle auf der Oberseite des Klebebandes. Die repositionierbare Klebmasse löst sich vom Material der zweiten Lage und die neue Rolle wird in die Maschine eingezogen, gehalten durch die permanent klebende Klebmasse am Klebeband-Ende.

Die WO 95/29115 A offenbart ein ähnliches Klebeband. Dieses zweiseitige Klebeband weist auf der Oberseite zwei Klebmassen, auf der Unterseite eine Klebmasse auf. Dieses Klebeband wird unter die oberste Lage der neuen Rolle fixiert. Dabei hält die eine Klebmasse die oberste Lage fest. Die zweite Klebmasse ist für den Kontakt mit der ablaufenden Bahn zuständig. Auf der Rückseite ist auch eine repositionierbare Klebmasse, die im Falle des Splices die oberste Lage freigibt.

Beide Klebebänder weisen einen gemeinsamen Nachteil auf. Bei beiden läuft die repositionierbare Klebmasse offen durch die Veredelungsmaschine, so dass es zu Bahnverklebungen an Umlenkrollen oder Drucktüchern kommen kann. Diese können dann zu Bahnabrissen führen.

Eine Verbesserung dieses Problems lehrt die DE 196 28 317 A. Das Klebeband ist ähnlich dem aus der WO 95/29115 A aufgebaut, allerdings ist die repositionierbare Klebmasse der Rückseite durch ein zweiseitiges Klebeband mit einem spaltfähigen Träger ersetzt. Im Falle des Splices spaltet der Träger und deckt mit den jeweiligen Spaltresten die Klebmassen so ab, dass diese nichtklebrig verbleiben. Damit werden störende Verklebungen beim Durchlauf durch die Veredelungsmaschinen verhindert. Eine weitere Verbesserung lehrt die DE 199 02 179 A. Dabei ist der Spaltstreifen von der vorderen Kante eingerückt. Durch diese Einrückung lässt sich die Spliceeffizienz deutlich steigern.

Die DE 198 41 609 A beschreibt ein zweiseitig klebendes Haftelement. Der Träger besteht nicht aus einem einschichtigen Papier, sondern aus einem Papier/Papierverbund, der mit aushärtenden Klebepunkten verbunden ist. Dieses Klebeband wird auch unter die oberste Lage geklebt. Im Falle des Splices reißen die Klebepunkte Papierfasern aus einem der Verbundpapiere und so wird die oberste Lage freigegeben.

Die US 6,432,241 B offenbart ein spaltbares Klebeband umfassend zwei Schichten und eine dazwischenliegende Vebindungsschicht, die als Sollbruchstelle fungiert. Die Verbindungsschicht weist im trockenen Zustand keine klebende Wirkung auf. Das Verbindungselement wird in einem Druckverfahren diskontinuierlich aufgetragen. Der Verlauf der Kante des Verbindungselementes in Längsrichtung ist nicht näher definiert.

All diese Produkte weisen einen Nachteil auf. Das spaltbare System, sei es nun ein Papier, ein Verbund aus zwei Papieren, ein Papier / Folien Verbund, ein Verbund aus zwei Folien oder eine Polymerschicht die spaltet, zeigt einen Kraftpeak im Moment des Anspaltens dadurch begründet, dass das spaltbare System auf ganzer Breite gleichzeitig spaltet.

Besonders bei Verwendung des Spliceklebebandes auf gestrichenen Papieren, und hier besonders gestrichenen Tiefdruckpapieren, führen die Kraftspitzen immer wieder zum Versagen des Klebebandes. Das Versagen ist unter anderem darin begründet, dass die Spaltkräfte höher als die Verankerungskräfte des Papierstrichs sein können, dann trennt sich der Strich vom Papier. Oder die Spaltkräfte sind sogar höher als die innere Festigkeit des Papiers, dann kommt es zu Papierabrissen. In beiden Fällen misslingt der Splice.

Eine Verbesserung lehrt die DE 100 58 956 A. Um eine Kraftspitze zu vermeiden, ist der Spaltstreifen zackig ausgeführt. Dabei deuten die Spitzen der Zacken in Laufrichtung des Prozesses, so dass im Moment des Splices die Spitze der Zacke zu spalten beginnt. Aufgrund der kleinen Fläche in der Spitze sind auch die Kraftwerte reduziert.

Dieses System weist allerdings den Nachteil auf, dass in der Spitze der Zacke die Verklebungsfläche gegen Null geht. Somit reicht die Klebkraft in der Spitze nicht aus, um ein Spalten in der Spitze zu gewährleisten. Abhängig von der zu spaltenden Papierqualität kommt es zu einem Spalten unterhalb der Spitze, nämlich dort, wo die Klebkräfte höher als die Spaltkräfte sind. Das heißt, es laufen zum Teil ungespaltene Bestandteile des Spaltstreifens durch die Druck- oder Papierweiterverarbeitungsmaschine, die zu Verunreinigungen führen können. Da die Klebkräfte des spaltbaren Systems abhängig von oder Papiertype sind, variiert die Größe dieser nichtgespaltenen Bestandteile und damit auch die Kraft, die zum Spalten benötigt wird.

Eine Verbesserung lehrt die DE 10 2005 051 181 A. Hier ist der Spaltstreifen nicht zackig ausgeführt, sondern in den Spitzen abgerundet. Dies führt zu einer Vergrößerung der Klebefläche, die immer eine ausreichende Klebkraft generiert und dadurch ein sicheres Spalten gewährleistet.

Allerdings zeigen die nicht geraden Geometrien des spaltbaren Systems eine Schwäche. Beim Abrollen des Klebebandes mit dem spaltbaren System von einer Klebebandrolle kommt es zu Spannungen an den quer zur Abwickelrichtung stehenden Anlaufkanten des spaltenden Systems und in einigen Fällen zum Anspalten des Spaltstreifens. Das frühzeitige Anspalten tritt vor allem bei Wellenformen bzw. Geometrien auf, die sich durch eine hohe Steigung der Geometrie auszeichnen. Da das spaltende System ein zusammenhängendes Flächengebilde darstellt, kann das unerwünschte Anspalten über eine längere Strecke des spaltbaren Systems laufen, in Einzelfällen kann es auch zu einem kompletten Spalten des wellenförmigen Spaltstreifen kommen. Besonders kritisch ist es in den Fällen, in denen es nicht vom Anwender bemerkt wird, da die Spliceperformance sinkt. Bemerkt der Anwender das Anspalten bzw. das komplette vorzeitige Spalten des Spaltstreifens, muss das Klebeband neu appliziert werden, was zeitaufwendig ist und die Produktivität negativ beeinflusst.

Des Weiteren ist dieses System auf Anwendungen begrenzt, in denen das spaltbare System Papier sein darf. Für Anwendungen, besonders in der folienherstellenden und verarbeitenden Industrie stellt Papier ein unerwünschtes Einsatzmaterial dar. Hier lässt sich das oben genannte System nicht einsetzen.

Weiterhin offenbart das mit Klebmasse beschichtete Spaltpapier eine Beschränkung in der Vielfalt der einsetzbaren Klebmassen. Die Klebmassen dürfen auf keinen Fall in das Spaltpapier aufgrund zu geringer Viskositäten migrieren, weil hierdurch die Spaltkräfte in unerwünschter Weise verändert werden können und dann in der Anwendung zu Fehlern führen.

Gelöst wird die Aufgabe durch eine Klebesystem zum Aneinanderfügen von Flachbahnen beim Rollenwechsel derartiger Bahnen, umfassend zwei Klebeband-Begrenzungskanten, die vorteilhaft im Wesentlichen parallel verlaufen und insbesondere die Längskanten eines Klebebandes bilden, weiterhin umfassend zumindest eine obere Trägerschicht und eine untere Trägerschicht sowie ein flächiges Verbindungselement, das die beiden Trägerschichten miteinander verbindet und das geeignet ist, unter den Bedingungen eines statischen oder fliegenden Rollenwechsels die Verbindung zu öffnen, und weiterhin umfassend zwei Klebmassenschichten, die jeweils auf der dem Verbindungselement abgewandten Oberfläche jeder Trägerschicht vorgesehen sind, wobei das Verbindungselement keine Klebmassenschicht ist und die Verbindung zwischen dem Verbindungselement und zumindest einer der Trägerschichten nicht mittels weiterer Klebmassenschichten bewirkt wird. Erfindungsgemäß umfasst das Verbindungselement eine Polymerschicht, die von der oberen und/oder der unteren Trägerschicht delaminierbar ist, wobei das Polymer für die Polymerschicht gewählt ist aus der Gruppe aus Polyvinylchloriden, Polyvinylenchlorid, Polyvinylalkoholen, Polyvinylacetaten, Polyvinylpyrrolidonen, Copolymeren von Vinylchlorid und Vinylacetat. Für das erfindungsgemäße Klebesystem gilt, dass zumindest eine der Begrenzungskanten des Verbindungselementes nicht geradlinig verläuft (mit anderen Worten: ungerade ist), wobei eine geradlinige Schwerpunktlinie (Hauptrichtungslinie) bezüglich dieser Begrenzungskante definiert ist, wobei die Schwerpunktlinie dieser Begrenzungskante sich entlang einer Vorzugsrichtung erstreckt, und wobei diese Begrenzungskante eine Vielzahl auf einer Seite ihrer Schwerpunktlinie liegende Bereiche sowie eine Vielzahl auf der anderen Seite ihrer Schwerpunktlinie liegende Bereiche aufweist.

Bevorzugt umfasst das Verbindungselement keine Klebmassenschichten; sehr bevorzugt weist Klebeband zwischen den Trägerschichten keine Klebmassenschichten auf. Nichtklebend im Sinne dieser Schrift bedeutet, dass die betreffende Schicht im Anwendungsfall keine klebenden oder haftklebenden Flächen freilegen kann, wenn man sie zerstört oder von ihrem Untergrund löst. So können die Schichten zwar beispielsweise als klebende Substanzen aufgetragen werden und in diesem Zustand die Fügeverbindung bewirken, in diesen Fällen findet aber danach eine Trocknung statt, so dass die verbleibende Schicht auch dann nicht mehr klebrig oder haftklebrig wäre, wenn sie freiliegen würde. Mit anderen Worten liegt in dem zur Anwendung verbleibenden Klebeband eine Schicht vor, die unabhängig von ihrer Abdeckung durch ein Trägermaterial oder durch andere Substrate nichtklebende Eigenschaften aufweist. Dem entgegengesetzt verbleiben Haftklebmassen auch dann an sich haftklebrig, wenn sie zwei Substanzen miteinander verklebt haben, ihre Funktionalität (ihre Klebewirkung) nach außen ist nur durch das Abdecken gehindert.

Im Sinne dieser Schrift sind Masseschichten dann keine Klebmassen, wenn sie im Anwendungszustand, also insbesondere im getrockneten Zustand, keine selbstklebenden Eigenschaften besitzen, also keinen Tack aufweisen.

Beim Aufblick auf die einzelnen Schichten (z.B. Trägerschichten, Klebmassenschichten oder die das Verbindungselement bildende Schicht) lässt sich der Verlauf der jeweiligen Begrenzungskanten der Schichten mathematisch als Kurven auffassen.

Als Schwerpunktlinie (auch als Hauptrichtungslinie bezeichnet) einer Kante wird im Rahmen dieser Schrift die Linie bezeichnet, durch die die Kurve, die die jeweilige Kante beschreibt, derart geteilt wird, dass der Gesamtflächeninhalt der auf einer Seite der Schwerpunktlinie liegenden Flächen, die durch die die Schwerpunktlinie darstellende Gerade und die Kurve selbst eingeschlossenen werden, und der Gesamtflächeninhalt der auf der anderen Seite der Schwerpunktlinie liegenden Flächen, die durch die die Schwerpunktlinie bildende Gerade und die Kurve eingeschlossenen sind, identisch sind.

In hervorragender Vorgehensweise verlaufen die Schwerpunktlinien [Hauptrichtungslinien] der zumindest zwei Klebeband-Begrenzungskanten (Längskanten des Klebebandes) parallel und erstrecken sich in die Vorzugsrichtung, dass heißt in die Richtung, in der sich auch die Schwerpunktlinie der nicht linear ausgebildeten Kante des Verbindungselementes erstreckt.

Das Verbindungselement kann bündig an einer der Längskanten zumindest einer Trägerschicht angeordnet sein, insbesondere derart, dass die am weitesten vorspringenden Punkte der nicht geradlinig ausgebildeten Kante des Verbindungselements auf der entsprechenden Trägerschichtkante liegen. Für den Einsatz der Erfindung im fliegenden Rollenwechsel hat es sich aber als sehr vorteilhaft herausgestellt, wenn das Verbindungselement in einem Abstand von einer Längskante zumindest einer Trägerschicht, vorteilhaft beider Trägerschichten, angeordnet ist, wobei der Abstand definiert wird als der Abstand der Linie durch die am weitesten in Richtung der entsprechenden Trägerschichtkante liegenden Punkte der Verbindungselement-Begrenzungskante zu der bzw. den Kanten(n) der Trägerschicht(en), bzw. bei ungerader bzw. ungeraden Trägerschichtkante(n) zu deren Schwerpunktlinie(n) .

Durch dieses neue Klebesystem werden die drei oben beschriebenen Problemstellungen gelöst.

Durch den neuartigen Klebebandaufbau wird das Anspalten des Spaltsstreifens beim Abrollen vermieden. Die Kraftebene beim Abrollen von der Rolle befindet sich zwischen Klebmasse der offenen Seite und Trennmedium, das Verbindungsmedium ist von einem Träger abgedeckt und wird somit nicht beansprucht, d.h. es kommt nicht zum vorzeitigen Trennen in der Verbindungsebene.

Da die Trägermaterialien nicht zwingend aus einem Papier hergestellt sein müssen, lässt sich ein papierfreies Produkt erstellen.

Da beide Klebmassen auf einem Träger beschichtet werden, der migrationsstabil sein kann, können auf beiden Seiten Klebmassen jeglicher Viskosität beschichtet werden.

Sehr vorteilhaft ist eine Ausgestaltung, bei der die Schwerpunktlinie der zumindest einen nicht geradlinig verlaufenden Begrenzungskante des Verbindungselementes zu der Schwerpunktlinie der Begrenzungskante zumindest einer der Trägerschichten einen Abstand aufweist.

Die Abstände sind neben der Anwendungsgeschwindigkeit abhängig von der Spaltarbeit (über die Breite des Verbindungselementes) und der Maximalkraft beim Spaltvorgang. Gemessen werden die Maximalkraft und die Spaltarbeit durch eine Spaltung in Anwendungsrichtung (T-Block), also insbesondere senkrecht zur Hauptrichtungslinie (die in vorzugsweiser Ausführung der Längsrichtung des Klebebandes entspricht).

Dabei sind beide Kriterien für die jeweilige Anwendung wichtig.

Der Maximalwert der Spaltkraft lässt sich durch die Art des Polymers (Verbindungselement bildende Schicht) oder den Masseauftrag des Polymers einstellen. Die Spaltarbeit ergibt sich dann zusätzlich durch die Breite des zu spaltenden Verbindungselementes und die Ausgestaltung der Begrenzungskante.

Gemessen werden Spaltkraftwerte sowie der Maximalwert der Spaltkraft in Anwendungsrichtung, also senkrecht zu der Hauptrichtungslinie der ungeraden Seite des Verbindungselementes (also insbesondere senkrecht zur Längsrichtung des Klebebandes). Dabei wird der obere Träger in einem 90 °-Winkel in einer Zugprüfmaschine von dem unteren Träger abgezogen, wobei das Verbindungselement trennt ("spaltet"). Die Abzugsgeschwindigkeit beträgt 300 mm/min. Der Initialwert der Spaltkraft (also der Spaltkraftwert beim Anspalten des Verbindungselementes) wird registriert, ebenso die Weiterspaltkräfte, die sich beim Spalten über die Verbindungselementbreite ermitteln lassen. Die Spaltarbeit lässt sich mit der bekannten Breite des trennenden Systems (Verbindungselementes) bestimmen.

Gemessen werden können ebenfalls Spaltkräfte (Weiterspaltkraft nach begonnenem Spaltvorgang) in Richtung der Hauptrichtungslinie des Verbindungselementes, also insbesondere in Längsrichtung des Klebebandes. Die in diese Richtung angegebenen Werte werden durch eine Messung ermittelt, bei der der obere Träger in einem 180 °-Winkel in einer Zugprüfmaschine von dem unteren Träger abgezogen, wobei das Verbindungselement trennt ("spaltet"); die Abzugsgeschwindigkeit beträgt auch hier 300 mm/min.

Sofern bei der Angabe von Spaltkraftwerten und Spaltarbeitwerten im Rahmen dieser Schrift nichts Weiteres gesagt ist, beziehen sich die Angaben jeweils auf die Messung in Anwendungsrichtung.

Für dünne, reißempfindliche Materialien sollte der Maximalwert der Spaltkraft vorteilhaft 1 N/cm nicht überschreiten und die Spaltarbeit bei weniger als 80 Nmm liegen.

Bei dickeren, weniger reißempfindlichen Materialien können die Werte höher liegen.

Für den Abstand gilt, dass je schneller der Splicevorgang in der Anwendung abläuft, desto geringer der Abstand von der vorderen Kante sein sollte, obwohl ein größerer Abstand das Spalten erleichtern würde und damit die Spliceeffizienz erhöhen würde. Gegenläufig läuft der Effekt, dass bei hohen Geschwindigkeiten das Umschlagrisiko der vorderen Kante steigt.

Der genannte Abstand zwischen der Schwerpunktlinie der nicht geradlinig verlaufenden Begrenzungskante des Verbindungselementes und der Schwerpunktlinie der Begrenzungskante zumindest einer der Trägerschichten beträgt insbesondere vorteilhaft bis zu 15 mm und sollte bevorzugt mindestens 0,3 mm aufweisen.

Insbesondere für Anwendungen in einem Geschwindigkeitsbereich von ca. 33 m/s bis ca. 15 m/s ist ein Abstand von 0,3 mm (vorteilhaft 0,5 mm) bis 2,5 mm ideal. Insbesondere für Geschwindigkeiten von ca. 15 m/s bis ca. 9 m/s sollte der Abstand bevorzugt 2,5 mm bis 5 mm betragen. Der Abstand kann größer gewählt werden, da aufgrund der geringeren Geschwindigkeiten ein nicht so hohes Umschlagrisiko der vorderen Kante besteht.

Insbesondere für Geschwindigkeiten von ca. 9 m/s bis ca. 5 m/s sollte der Abstand vorteilhaft 5 mm bis 10 mm betragen und insbesondere bei fast statischen Anwendungen sollte der Abstand bevorzugt zwischen 10 mm bis 15 mm (Grenzen eingeschlossen) liegen.

Die Abstände sind unabhängig von der Klebebandbreite.

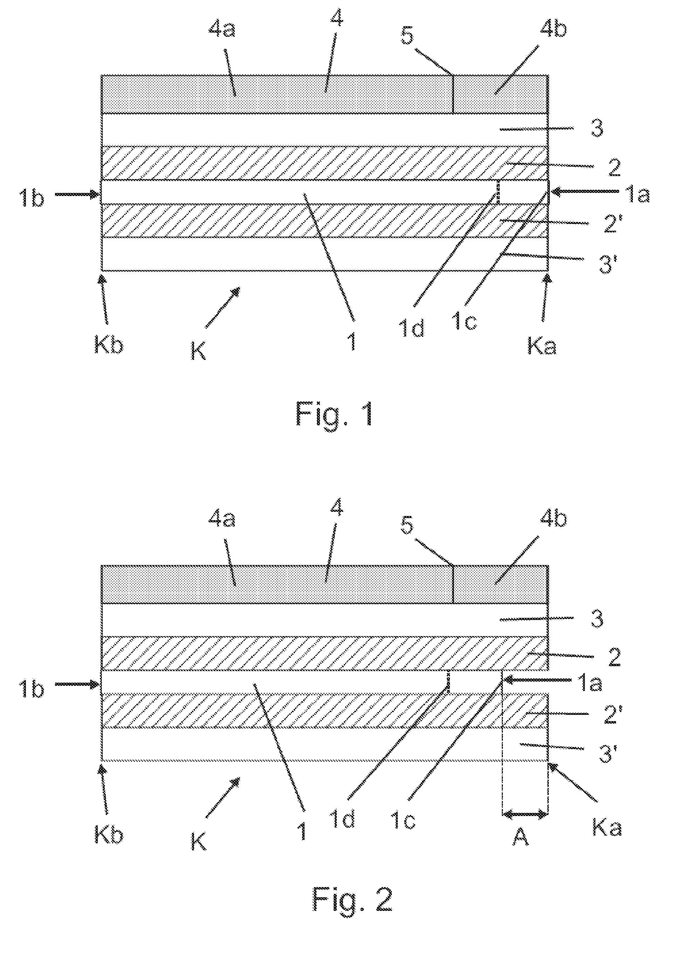

Die Fig. 1 bis 4 zeigen schematisch und ohne sich durch die dargestellten Ausführungsformen in der erfinderischen Idee unnötig beschränken zu wollen 4 unterschiedliche Ausführungsformen des erfindungsgemäßen Klebesystems im Seitenriss, wobei sich insbesondere durch quasi-unendliche Ausdehnung der Klebesysteme senkrecht in die Papierebene hinein erfindungsgemäße Klebebänder ergeben.

Fig. 1 zeigt ein erfindungsgemäßes Klebesystem K mit einem flächigen Verbindungselement 1 zwischen 2 Trägerschichten 2, 2' (eine obere Trägerschicht 2 und eine untere Trägerschicht 2'), die ihrerseits jeweils mit einer Klebmasse 3, 3', insbesondere mit Haftklebmassen, beschichtet sind (Klebemassenschichten 3, 3', die jeweils auf der dem Verbindungselement 1 abgewandten Oberfläche jeder Trägerschicht 2, 2' vorgesehen sind). Optional kann eine Abdeckung 4 auf zumindest einer der Klebmassenschichten 3, 3', insbesondere der Klebemassenschicht 3 auf der oberen Trägerschicht 2 (in den Figuren beispielhaft so dargestellt), vorgesehen sein, die vorteilhaft mit einem Schnitt 5, einer Perforation oder ähnlichem in zwei Abschnitte 4a, 4b aufgeteilt ist.

Das Klebesystem weist die äußeren Klebeband-Begrenzungskanten Ka und Kb auf. Mindestens eine der Begrenzungskanten des Verbindungselementes 1a, 1 b verläuft nicht geradlinig (hier die Kante 1 a), in Fig. 1 dargestellt durch die am weitesten in Richtung der Klebesystemkante Ka liegenden Punkte 1c und die am weitesten zurück liegenden Punkte 1d der Verbindungselementkante. Diese Verbindungselementkante 1a. kann beispielsweise wellenförmig verlaufen, so dass in diesem Fall in Fig. 1 die Positionsziffer 1 c die "Wellenberge" und die Positionsziffer 1 d die "Wellentäler" darstellen würde.

Fig. 2 zeigt eine Ausführungsform der Erfindung, bei der die Begrenzungskante 1 a des Verbindungselementes 1 vorteilhaft um den Abstand A eingerückt sein ist (siehe zum Abstand A auch die vorstehenden Ausführungen).

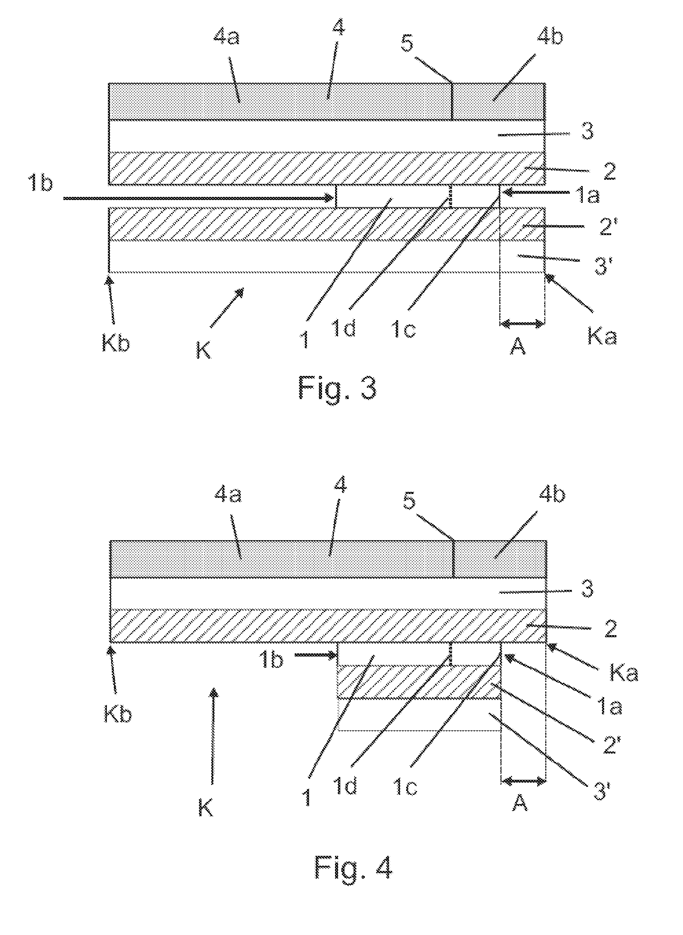

In Fig. 3 ist anhand einer beispielhaften Ausführungsform dargestellt, dass die gegenüberliegende Begrenzungskante 1b des Verbindungselementes 1 ebenfalls von der entsprechenden Klebebandkante Kb eingerückt angeordnet sein kann, so dass sich das Verbindungselement 1, gesehen von der Begrenzungskante 1a aus, nur über einen begrenzten Teil des Klebebandes K erstreckt.

Fig. 4 zeigt beispielhaft an einer weiteren Ausführungsform, dass der zweite Träger 2' (in der Figur der untere Träger) schmaler ausgeführt sein kann, etwa beispielsweise im Wesentlichen der Breite des Verbindungselementes 1 entsprechen kann. Der untere Träger 2' kann dabei auch breiter als das Verbindungselement 1, aber schmaler als der obere Träger 2 ausgestaltet sein (nicht figürlich dargestellt).

Da der Spliceerfolg von der Gesamtarbeit des Spaltprozesses abhängt, bietet die Erfindung den Vorteil, dass unterschiedliche Breiten des Verbindungselements durch die Wellenform nivelliert werden können. D.h. bei unterschiedlichen Breiten des Klebebandes lassen sich gleiche Gesamtarbeitswerte durch die Wellengeometrie einstellen, ohne das verwendete Polymer oder dessen Masseauftrag anpassen zu müssen.

Die nicht geradlinig verlaufende Begrenzungskante kann insbesondere in Form einer Wellenlinie ausgebildet sein, die gleichmäßig oder ungleichmäßig ausgebildet sein kann. Die Wellenform kann dabei symmetrisch als auch unsymmetrisch vorliegen. Eine symmetrische Wellenform ergibt sich insbesondere daraus, dass die Begrenzungskante periodisch sich wiederholende Abschnitte aufweist, für die jeweils eine Spiegelachse definiert werden kann, die insbesondere senkrecht zur Schwerpunktlinie der entsprechenden Kante angeordnet ist.

Die Kanten des Verbindungselementes können vorteilhaft so ausgeformt sein, wie dies für die Kanten eines spaltfreudigen Klebebandes in der DE 10 2005 051 181 A dargestellt ist. Entsprechend ist für diese erfindungsgemäße Ausführungsform die zumindest eine nicht geradlinig verlaufende Begrenzungskante des Verbindungselements derart ausgestaltet, dass sie Vorsprünge aufweist, die an ihren am weitesten vorspringenden Stellen gerundet ausgeführt sind.

Eine Weiterentwicklung dieser Ausführungsform zeichnet sich dadurch aus, dass die nicht geradlinig verlaufende Kante an ihren am weitesten zurückspringenden Stellen ebenfalls gerundet ausgebildet ist, vorzugsweise derart, dass an diesen Stellen die Krümmung wesentlich schärfer ist als an den vorspringenden Stellen.

Vorteilhaft ist die nicht geradlinig verlaufende Kante jeweils zwischen einer am weitesten vorspringenden Stelle und der ihr nächstliegenden am weitesten zurückspringenden Stelle stetig differenzierbar, bevorzugt mit drei Wendepunkten.

In einer anderen vorteilhaften Ausgestaltung ist die nicht geradlinig verlaufende Kante jeweils zwischen einer am weitesten vorspringenden Stelle und der ihr nächstliegenden am weitesten zurückspringenden Stelle stetig differenzierbar mit einem Wendepunkt.

In einer nächsten erfindungsgemäß vorteilhaften Weiterentwicklung ist die nicht geradlinig verlaufende Kante zusammengesetzt aus einer alternierenden Abfolge von Halbkreisen.

In einer vorteilhaften Ausgestaltung des erfindungsgemäßen Klebesystems gilt für die mindestens eine nicht geradlinige Begrenzungskante des Verbindungselements, dass das Negativ eines jeden Rücksprunges enger ausgebildet ist als das Positiv eines benachbarten Vorsprunges.

Vorteilhaft kann es für die erfindungsgemäße Lehre auch sein, dass die mindestens eine nicht geradlinige Begrenzungskante des Verbindungselements zwei oder mehr Scharen von Vorsprüngen aufweist, die unterschiedlich weit vorspringen nach einem regelmäßigen Muster.

In einer vorteilhaften Ausgestaltung des erfindungsgemäßen spaltfähigen Klebesystems verlaufen beide Begrenzungskanten des Verbindungselements nicht-geradlinig und besitzen insbesondere die gleiche Periodenlänge.

In einer vorteilhaften Weiterentwicklung der Erfindung gilt für das Verbindungselement des Klebesystems, dass seine vor- und seine nacheilende Kante parallel zueinander verlaufen, sodass die Verbindungselement-Breite trotz der Nichtgeradlinigkeit der beiden Verbindungselement-Kanten überall gleich ist.

Vorteilhafte Weiterentwicklungen der Erfindung bezüglich des Verlaufs der zumindest einen nicht geradlinig verlaufenden Begrenzungskante des Verbindungselementes zeichnen sich dadurch aus, dass diese Kante nicht symmetrisch bezüglich einer - insbesondere senkrecht auf ihre Schwerpunktlinie stehende - Spiegelachse ist.

Dies kann vorteilhaft dadurch bewirkt werden, dass - in eine Vorzugsrichtung entlang der Schwerpunktlinie - für die Mehrzahl der Vorsprünge der ansteigende Kurvenbereich bis zum am weitesten vorspringenden Punkt des Vorsprungs weniger steil verläuft als der an diesen am weitesten vorspringenden Punkt anschließende, abfallende Kurvenverlauf, dass die die Begrenzungskante beschreibende Kurve im ansteigenden Bereich bis zum Vorsprungsmaximum für eine Vielzahl der Vorsprünge somit flacher verläuft als im anschließenden abfallenden Bereich. Als Steilheit eines jeden Kurvenabschnitts (auch als Kurvenbereich bezeichnet) wird dabei der Betrag der Steigung einer Geraden angesehen, die durch zwei den jeweiligen Kurvenabschnitt begrenzende Punkte verläuft. Die Steilheit entspricht damit mathematisch dem Mittelwert der ersten Ableitung des Kurvenabschnitts, soweit sich der Kurvenabschnitt als Riemann-Integral seiner ersten Ableitung darstellen lässt.

Eine derartige "schiefe" Wellenform kann insbesondere als Weiterentwicklung der Ausführungsform entsprechend der Kantenformen, wie sie für Klebebänderkanten aus der DE 10 2005 051 181 A bekannt sind (siehe oben), realisiert sein.

Vorteilhafte Ausführungsformen des Verbindungselements sind derart ausgestaltet, dass dessen zweite Begrenzungskante, die der nicht geradlinig verlaufenden Begrenzungskante gegenüberliegt, in Form einer Kurve ausgebildet ist, die sich durch Parallelverschiebung der die erste Begrenzungskante abbildenden Kurve entlang einer auf deren Schwerpunktlinie senkrecht stehenden Linie - und gegebenenfalls einer gleichzeitigen Verschiebung entlang der Schwerpunktlinie - ergibt.

Eine nächste Realisierung der erfindungsgemäßen Lehre ergibt sich durch Klebebänder, bei denen das Verbindungselement in Form eines mehrfach unterbrochenen Streifens aufgebaut ist, der sich in Längsrichtung des Verbindungselementes erstreckt. Dabei weist jedes Segment einen oder mehrere Vorsprünge auf, insbesondere solche, die an ihren am weitesten vorspringenden Stellen gerundet ausgeführt sind.

Das erfindungsgemäße Klebesystem unterscheidet sich von denen des Standes der Technik insbesondere dadurch, dass das Verbindungselement zwischen den beiden Trägerschichten nichtklebend ausgestaltet ist und zumindest mit einer der Trägerschichten nichtklebend verbunden ist. Insbesondere vorteilhaft weist das erfindungsgemäße Klebesystem ein Verbindungselement auf, welches nicht durch ein flächig spaltendes Papier realisiert ist.

Bei einem Verbindungselement, welches beispielsweise ein Spaltpapier umfasst, das klebend an einer oder zwischen zwei Trägerschichten vorgesehen ist, müssen die Kräfte als inhärente Eigenschaften des Papiers eingestellt werden. Entsprechend schwierig ist es, geeignete Papiere für diesen Einsatzzweck zu finden. Sieht man ein Verbindungselement vor, wie es in der vorliegenden Schrift vorgeschlagen wird, so hat man den Vorteil, durch die Wahl geeigneter Polymere und durch die spezielle Ausformung des Elementes sehr bequem Einfluss auf die resultierenden Spaltkräfte nehmen zu können und diese optimal auf den vorgesehenen Einsatzzweck einstellen zu können. Zudem lässt sich ein solches Verbindungselement sehr dünn einstellen: Während der Stand der Technik hier zumindest zwei Klebstoffschichten und eine spaltfähige Lage vorsieht, ist es erfindungsgemäß hinreichend, wenn zumindest eine dünne Schicht eines Polymers, einer Kaschiermasse oder dergleichen vorliegt.

Das Verbindungselement ist insbesondere derart ausgestaltet, dass es unter solchen Beanspruchungen, wie sie während des fliegenden Rollenwechsels auftreten, die Fügung der zwei Trägerschichten zuverlässig miteinander löst. In sofern stellt das Verbindungselement eine "Sollbruchstelle" unter entsprechender Beanspruchung dar. Hierzu ist das Klebesystem umfassend die Trägerschichten und das Verbindungselement insbesondere derart optimiert, dass es gut solche Kräfte überträgt, die innerhalb der Klebesystemebene im wesentlichen quer zu seiner Längserstreckung gerichtet sind, während gegenüber Kräften in der Dickenrichtung des Klebesystems genau im Gegenteil schon ein Versagen bei möglichst niedrigen Kraftbeträgen angestrebt ist. Die Gewährleistung dieses Verhaltens wird dabei maßgeblich durch die Wahl und die Ausgestaltung des Verbindungselements beeinflusst.

Das Verbindungselement kann sich dabei von der oberen oder von der unteren Trägerschicht lösen, um die Fügung zu trennen, es sind auch Ausführungsformen realisierbar, dass eine Lösung von beiden Trägerschichten möglich ist. Bei der zuletzt dargestellten Variante kann die Lösung von beiden Trägerschichten gleichzeitig ablaufen, oder die Lösung erfolgt statistisch mal von der einen, mal von der anderen Trägerschicht ohne besondere Bevorzugung. Weiterhin sind Ausführungsformen realisierbar, bei denen prinzipiell die Lösung von beiden Trägerschichten möglich ist, jedoch die Lösung von einer der Schichten bevorzugt ist.

Eine Variante des Verbindungselementes weist zumindest zwei Schichten auf, wobei die Trennung des Systems nicht durch Delamination von einer der beiden Trägerschichten, sondern durch Lösen der beiden Schichten voneinander geschieht. Um das Delaminierverhalten von einer der Trägerschichten zu verbessern oder - auf der Seite, die während des Splice-Vorganges nicht delaminieren soll - auch zu verschlechtern, kann zwischen der Polymerschicht und der entsprechenden Trägerschicht, eine weitere Schicht vorgesehen sein, die den entsprechenden Effekt bewirkt oder fördert. Vorteilhaft kann eine der Trägerschichten derart vorbehandelt bzw. beschichtet sein, dass die Delamination der Polymerschicht gefördert wird, und die andere der Trägerschichten derart vorbehandelt oder beschichtet sein, dass die Adhäsion der Polymerschicht zu dieser Trägerschicht verbessert wird.

Es ist sehr vorteilhaft, nur sehr dünne Schichten vorzusehen oder die Trägerschicht(en) selbst entsprechend zu imprägnieren, um die Gesamtdicke des Klebesystems möglichst gering zu belassen.

Weiterhin kann das Verbindungselement derart ausgestaltet sein, dass der Lösevorgang der beiden Trägerschichten voneinander derart bewirkt wird, dass das Verbindungselement - oder eine Schicht des Verbindungselementes - aufbricht, also bezüglich dieser Schicht keine flächige Spaltung stattfindet. In diesem Fall bleiben Reste der aufgebrochenen Schicht des Verbindungselementes sowohl auf Seiten der oberen Trägerschicht als auch auf Seiten der unteren Trägerschicht erhalten.

In einer vorteilhaften Ausgestaltung des erfindungsgemäßen Klebesystems stellt das Verbindungselement keine geschlossene Schicht dar. Insbesondere kann das Verbindungselement aus einer Vielzahl einzelner Flächenelemente bestehen, die zwischen den Trägerschichten vorgesehen sind.

Derartige Anordnungen lassen sich beispielsweise vorteilhaft derart herstellen, dass das Verbindungselement im Siebdruck oder mittels Rasterwalze auf eine der Trägerschichten aufgetragen wird.

Die einzelnen Flächenelemente können insbesondere derart angeordnet sein, dass sie berührungsfrei zueinander angeordnet sind. Über die Geometrie der Flächenelemente, also etwa beispielsweise deren geometrische Form, deren Größe und/oder ihrer Anordnung zueinander, lassen sich hervorragend die Trennkräfte einstellen, die zum Trennen der beiden Trägerschichten voneinander notwendig sind.

Das Verbindungselement zwischen den beiden Trägerschichten zeichnet sich dadurch aus, dass es nichtklebend mit zumindest einer der beiden Trägerschichten, besonders vorteilhaft mit beiden Trägerschichten verbunden ist. Durch den Verzicht auf die Klebmassenschichten kann man das Klebesystem sehr dünn gestalten, was vorteilhaft für den Einsatz insbesondere im fliegenden Rollenwechsel ist.

So wird die Papierbahn beispielsweise in Druck- und Papierveredelungsmaschinen in hohen Geschwindigkeiten durch sehr schmale Bereiche, wie Walzenpaare, Spalte, Glättwerke und dergleichen gefahren, in der Druckindustrie werden sie beispielsweise schließlich noch in Falzapparaturen eingebracht. Je dünner man das Klebeband - bei ausreichender Qualität für die Anforderungen beim Splicevorgang - gestalten kann, desto geringer ist die Gefahr von unbeabsichtigten Abrissen oder sonstigen Fehlern im automatischen Betrieb. Jeder dieser Fehler ist mit erheblichen Kosten verbunden, da die Anlage angehalten und später wieder angefahren werden muss. Durch das erfindungsgemäße Klebeband ist es gelungen, diese Fehler weitgehend zu vermeiden.

Das Verbindungselement ist in der Lage, unter den Bedingungen eines statischen oder "fliegenden" (insbesondere automatisierten) Rollenwechsels die Verbindung zu öffnen und übernimmt somit die Funktion einer "Sollbruchstelle". Durch die nicht vorhandenen Klebmassenschichten lässt sich üblicherweise zur Erzeugung des Spaltvorgangs kein spaltfähiges Papier einsetzen, wie dies aus dem Stand der Technik bekannt ist.

In einer vorteilhaften Vorgehensweise lässt sich ein Verbindungselement einsetzen, das eine Polymerschicht umfasst, die entweder von der oberen oder von der unteren Trägerschicht delaminierbar ist. Auch sind Ausführungsformen realisierbar, in denen die Polymerschicht sowohl von der oberen als auch von der unteren Trägerschicht delaminierbar ist, etwa dann, wenn es apparativ keine Schwierigkeiten macht, wo die Delamination stattfindet.

In der einfachsten Ausführung dieser Ausgestaltung stellt die Polymerschicht das Verbindungselement dar.

Die Polymerschicht(en) des Verbindungselements kann (können) beispielsweise erzeugt werden, indem das die Polymerschicht erzeugende Polymer (etwa ein Lack) auf eine der Trägerschichten - oder gegebenenfalls einer (insbesondere funktionellen) Zwischenschicht - aufgetragen wird, beispielsweise aufgedruckt wird. Will man die Polymerschicht nicht vollflächig auftragen, so lässt sich beispielsweise hervorragend der Siebdruck anwenden. Auf die noch nicht getrocknete Polymerlösung oder auf das noch nicht ausgehärtete Polymer kann dann eine weitere Schicht oder insbesondere - für Verbindungselemente, die aus einer Polymerschicht aufgebaut sind - die zweite Trägerschicht aufgelegt werden, so dass sich nach der Trocknung bzw. nach der Aushärtung ein Verbund der Trägerschichten mittels des Polymers ergibt. Durch die Wahl der chemischen Natur des Polymers, die aufgetragene Menge des Polymers, die Form der Auftragung (vollflächig, teilflächig, lokal usw.), die Wahl der Trägerschichtenmaterialien und die Art der Vorbehandlung der Trägermaterialien lässt sich die Kraft, die zur Delaminierung des Verbundes notwendig ist, beeinflussen, weiterhin auch, von welcher der Trägerschichten die Polymerschicht bevorzugt delaminiert.

Als Polymerschicht für das erfindungsgemäße Klebesystem können sehr vorteilhaft solche Polymere eingesetzt werden, wie sie in der WO 99/46196 A offenbart sind, dort insbesondere auf Seite 9, Zeilen 15 bis 29. Erfindungsgemäß wird das Polymer für die Polymerschicht gewählt aus der Gruppe umfassend Polyvinylchloride, Polyvinylidenchlorid, Polyvinylalkohole, Polyvinylacetate, Polyvinylpyrrolidone, Copolymere von Vinylchlorid und Vinylacetat. Als Additive können beispielsweise Benetzungsmittel, Entschäumer, Weichmacher und/oder Fungizide eingesetzt werden.

Ein bevorzugtes, in der vorstehend genannten Schrift offenbartes und auch in der vorliegenden Erfindung hervorragend einzusetzendes Polymer ist ein repulpierbares Polymer, beispielsweise auf Polyvinylalkoholbasis, vorzugsweise außerdem umfassend einen oder mehrere Weichmacher. Als Weichmacher werden besonders bevorzugt Verbindungen wie Polyole (beispielweise Diethylenglycol), hydroxy-modifizierte Kautschuke oder eine Kombination aus beidem eingesetzt.

In einer vorteilhaften Vorgehensweise ist das erfindungsgemäße Klebesystem auf zumindest einer seiner Klebmassenschichten zumindest temporär mit einem Trennmaterial abgedeckt, insbesondere um die Handhabbarkeit zu erleichtern. Hierzu können die dem Fachmann für diesen Verwendungszweck geläufigen Materialien eingesetzt werden; die Abdeckung besteht insbesondere aus einem silikonisierten Material, vorzugsweise aus silikonisiertem Papier. Die Abdeckung kann mit einem Schnitt oder einer Sollbruchstelle, insbesondere in Form einer Perforation, eines Anschnitts, einer Schlitzung oder ähnlichem, der bzw. die in Längsrichtung des Klebebandes verläuft, in zwei Abschnitte und geteilt sein oder für eine mögliche Teilung vorbereitet sein.

Das erfindungsgemäße Klebesystem kann insbesondere in Form eines in der Vorzugsrichtung ausgedehnten Klebestreifens (im Folgenden auch als Klebeband bezeichnet) vorliegen. Das als Klebeband ausgeführte Klebesystem kann hervorragend derart angeboten werden, dass es zu einer Rolle (geometrisch korrekt: zu einer archimedischen Spirale) aufgewickelt ist.

Gegenstand der Erfindung ist weiterhin ein Verfahren für den fliegenden Rollenwechsel unter Einsatz eines erfindungsgemäßen Klebesystems.

Das erfindungsgemäße Verfahren zum Verbinden zweier Flachbahnen während des fliegenden Rollenwechsels von auf Rollen aufgewickeltem Flachbahnmaterial wird im folgenden anhand eines Ausführungsbeispiels beschrieben, ohne sich durch die Wahl der Ausführungsbeispiele unnötig im Gegenstand der Erfindung beschränken zu wollen. Bei einer ersten Variante des erfindungsgemäßen Verfahrens wird die oberste Flachbahnwicklung (insbesondere deren Ende oder deren Endbereich) einer neuen Rolle mit einem zur Erzielung einer wieder klebeflächenfrei trennbaren Klebeverbindung geeigneten erfindungsgemäßen Klebesystem an der darunter liegenden Flachbahnwicklung fixiert, so dass ein zum Verbinden mit der ablaufenden Flachbahn benötigter Teil einer Selbstklebmasse offenliegt. Daraufhin wird die so ausgerüstete neue Rolle neben eine fast gänzlich abgespulte zu ersetzende alte Rolle platziert und auf die im wesentlichen gleiche Drehgeschwindigkeit wie diese beschleunigt, dann gegen die alte Flachbahn gedrückt, wobei die offenliegende Selbstklebmasse des Klebesystems mit der alten Flachbahn bei im wesentlichen gleichen Geschwindigkeiten der Bahnen verklebt, während zugleich die Verklebung der obersten Flachbahnlage (Endlage der Wicklung) auf der darunter liegenden Flachbahnlage derart flächig trennt, dass nach dem Trennvorgang keine klebenden Bereiche offenliegen. Die Trennung der Verklebung der obersten Flachbahnlage mit der darunter liegenden Flachbahnlage erfolgt dabei insbesondere nach einem der für das erfindungsgemäße Klebesystem bereits beschriebenen Trennmechanismen, also durch ein Lösen des Verbindungselementes, wie es vorstehend ausführlich dargelegt wurde.

Es wird ein erfindungsgemäßes Klebesystem eingesetzt, also ein solches umfassend eine obere Trägerschicht und eine untere Trägerschicht, ein flächiges Verbindungselement, das die beiden Trägerschichten miteinander verbindet und das geeignet ist, unter den Bedingungen eines statischen oder fliegenden Rollenwechsels die Verbindung zu öffnen, weiterhin zwei Klebmassenschichten, die jeweils auf der dem Verbindungselement abgewandten Oberfläche jeder Trägerschicht vorgesehen sind, wobei das Verbindungselement keine Klebmassenschicht ist und die Verbindungen zwischen dem Verbindungselement und zumindest einer der Trägerschichten nicht mittels weiterer Klebmassenschichten bewirkt wird, wobei weiterhin zumindest eine der Begrenzungskanten des Verbindungselementes nicht geradlinig verläuft, wobei eine geradlinige Schwerpunktlinie (Hauptrichtungslinie) bezüglich dieser Begrenzungskante definiert ist, wobei die Schwerpunktlinie dieser Begrenzungskante sich entlang einer Vorzugsrichtung erstreckt und diese Begrenzungskante eine Vielzahl auf einer Seite ihrer Schwerpunktlinie liegende Bereiche sowie eine Vielzahl auf der anderen Seite ihrer Schwerpunktlinie liegende Bereiche aufweist.

In einer vorteilhaften Weiterentwicklung des erfinderischen Verfahrens wird das Klebeband rechtwinklig zur laufenden Flachbahn verklebt. In anderen vorteilhaften Varianten des erfindungsgemäßen Verfahrens kann die Verklebung des Klebebandes auch in einem spitzen Winkel von bis zu 30° zur laufenden Flachbahn, insbesondere von bis zu 10° erfolgen.

Der Trennvorgang erfolgt dann bevorzugt - insbesondere im Fall des rechtwinklig zur laufenden Flachbahn verklebten Klebebandes - quer zur Schwerpunktlinie der nicht geradlinigen Begrenzungskante des Verbindungselementes, das heißt, der Trennvorgang beginnt in den am weitesten herausragenden Vorsprüngen des Verbindungselements.

Bei den Flachbahnen handelt es sich insbesondere um Papierbahnen und/oder um Folienbahnen und/oder um Textilmaterialbahnen (Gewebe, Gewirke, Vliese oder dergleichen).

Durch die Form des Verbindungselementes kann die entsprechende Trenn- bzw. Lösekraft -abhängig vom Material- vorteilhaft eingestellt werden. Die Form bzw. Geometrie des Verbindungselementes führt dazu, dass in Querrichtung des Klebebandes eine möglichst geringe Kraft zum Anspalten erforderlich ist. Diese Kraft darf aber auch nicht zu gering sein, um in der Beschleunigungsphase des Spliceprozesses die Rolle bzw. den Ballen des zu spleißenden Flachbahnmaterials, der mit dem erfindungsgemäßen Klebeband verklebt ist, nicht zu früh zu öffnen, und so zu einem Abriss zu führen. Dies gilt vor allem für gurtgetriebene Anlagen, bei denen im Bereich des Gurtes eine besondere Festigkeit erforderlich ist.

Das erfindungsgemäße Klebeband hat sich als hervorragend für den bestimmungsgemäßen Einsatz geeignet gezeigt.

## Patentansprüche

1. Klebesystem zum Aneinanderfügen von Flachbahnen beim Rollenwechsel derartiger Bahnen, umfassend zwei Klebeband-Begrenzungskanten, weiterhin umfassend
- eine obere Trägerschicht und eine untere Trägerschicht
- ein flächiges Verbindungselement, das
∘ die beiden Trägerschichten miteinander verbindet und
∘ das geeignet ist, unter den Bedingungen eines statischen oder fliegenden Rollenwechsels die Verbindung zu öffnen,
- zwei Klebmassenschichten, die jeweils auf der dem Verbindungselement abgewandten Oberfläche jeder Trägerschicht vorgesehen sind,
wobei
- das Verbindungselement keine Klebmassenschicht ist, wobei Masseschichten dann keine Klebmassenschichten sind, wenn sie im getrockneten Zustand keine selbstklebenden Eigenschaften besitzen, also keinen Tack aufweisen,
- die Verbindungen zwischen dem Verbindungselement und zumindest einer der Trägerschichten, nicht mittels weiterer Klebmassenschichten bewirkt wird,
**dadurch gekennzeichnet, dass**
- das Verbindungselement
∘ eine Polymerschicht umfasst, die von der oberen und/oder der unteren Tragerschicht delaminierbar ist, wobei das Polymer für die Polymerschicht gewählt ist aus der Gruppe aus Polyvinylchloriden Polyvinylidenchlorid, Polyvinylalkoholen, Polyvinylacetaten, Polyvinylpyrrolidonen, Copolymeren von Vinylchlorid und Vinylacetat,
- zumindest eine der Begrenzungskanten des Verbindungselementes nicht geradlinig verläuft.
- wobei eine geradlinige Schwerpunktlinie (Hauptrichtungslinie) bezüglich dieser Begrenzungskante definiert ist, wobei
- die Schwerpunktlinie dieser Begrenzungskante sich entlang einer Vorzugsrichtung erstreckt,
- diese Begrenzungskante eine Vielzahl auf einer Seite ihrer Schwerpunktlinie liegende Bereiche sowie eine Vielzahl auf der anderen Seite ihrer Schwerpunktlinie liegende Bereiche aufweist.

2. Klebesystem nach Anspruch 1, **dadurch gekennzeichnet, dass** es in Form eines in der Vorzugsrichtung ausgedehnten Klebestreifens vorliegt.

3. Klebesystem nach einem der vorangehenden Ansprüche, **dadurch gekennzeichnet, dass**
die Polymerschicht das Verbindungselement darstellt.

4. Klebesystem nach einem der vorangehenden Ansprüche, **dadurch gekennzeichnet, dass**
das Verbindungselement in Form einer Vielzahl einzelner Flächenelemente vorliegt.

5. Klebesystem nach einem der vorangehenden Ansprüche, **dadurch gekennzeichnet, dass**
die Schwerpunktlinien [Hauptrichtungslinien] der zumindest zwei Längskanten (L₁, L₂) parallel verlaufen und sich in die Vorzugsrichtung erstrecken.

6. Klebesystem nach einem der vorangehenden Ansprüche, **dadurch gekennzeichnet, dass**
die Schwerpunktlinie der zumindest einen nicht geradlinig verlaufenden Begrenzungskante des Verbindungselementes zu der Schwerpunktlinie der Begrenzungskante zumindest einer der Trägerschichten einen Abstand aufweist.

7. Klebesystem nach Anspruch 6, **dadurch gekennzeichnet, dass** der Abstand 0,5 bis 15 mm beträgt.

8. Klebesystem nach einem der vorangehenden Ansprüche, **dadurch gekennzeichnet, dass**
zwischen der Polymerschicht und der Trägerschicht, von der die Polymerschicht delaminierbar ist, eine weitere Schicht vorgesehen ist.

9. Verfahren zum Verbinden zweier Flachbahnen während des fliegenden Rollenwechsels von auf Rollen aufgewickeltem Plachbahnmaterial unter Verwendung eines Klebesystem nach einem der Ansprüche 1 bis 8.

10. Rollenwickel eines Klebebandes umfassend ein Klebesystem nach einem der Ansprüche 1 bis 8.

## Claims

1. Adhesive bonding system for joining flat webs when changing rolls of such webs, comprising two adhesive tape boundary edges, and further comprising
- a top carrier layer and a bottom carrier layer
- a flat connecting element that
o connects the two carrier layers to one another and
o is suitable for opening the connection under the conditions of a static or flying roll change,
- two layers of adhesive, each provided on the surface of each carrier layer that faces away from the connecting element,
where
- the connecting element is not a layer of adhesive, where layers of composition are not layers of adhesive when in the dried state they possess no self-adhesive properties, in other words have no tack,
- the connection between the connecting element and at least one of the carrier layers is not brought about by means of further layers of adhesive, **characterized in that**
- the connecting element
o comprises a polymer layer which is delaminable from the top and/or the bottom carrier layer(s), the polymer for the polymer layer being selected from the group of polyvinyl chlorides, polyvinylidene chloride, polyvinyl alcohols, polyvinyl acetates, polyvinylpyrrolidones, copolymers of vinyl chloride and vinyl acetate,
- at least one of the boundary edges of the connecting element does not extend in a straight line,
- and a straight-line emphasis line (main direction line) is defined in relation to this boundary edge,
- the emphasis line of this boundary edge extending along a preferential direction, and
- this boundary edge having a multiplicity of regions lying on one side of its emphasis line and also a multiplicity of regions lying on the other side of its emphasis line.

2. Adhesive bonding system according to Claim 1, **characterized in that** it takes the form of an adhesive strip extended in the preferential direction.

3. Adhesive bonding system according to any of the preceding claims, **characterized in that** the polymer layer constitutes the connecting element.

4. Adhesive bonding system according to any of the preceding claims, **characterized in that** the connecting element takes the form of a multiplicity of individual substantially two-dimensional elements.

5. Adhesive bonding system according to any of the preceding claims, **characterized in that** the emphasis lines [main direction lines] of the at least two long edges (L₁, L₂) run parallel and extend in the preferential direction.

6. Adhesive bonding system according to any of the preceding claims, **characterized in that** the emphasis line of the at least one boundary edge, not extending in a straight line, of the connecting element to the emphasis line of the boundary edge of at least one of the carrier layers exhibits a spacing.

7. Adhesive bonding system according to Claim 6, **characterized in that** the spacing is 0.5 mm to 15 mm.

8. Adhesive bonding system according to any of the preceding claims, **characterized in that** a further layer is provided between the polymer layer and the carrier layer from which the polymer layer is delaminable.

9. Method of connecting two flat webs during flying roll change of flat-web material wound up to form rolls, using an adhesive bonding system according to any of Claims 1 to 8.

10. Wound roll of an adhesive tape comprising an adhesive bonding system according to any of Claims 1 to 8.

## Revendications

1. Système adhésif pour joindre l'une à l'autre des bandes plates lors du changement de rouleaux de ces bandes, comprenant deux bords de délimitation de la bande adhésive, comprenant en outre
- une couche support supérieure et une couche support inférieure
- un élément d'assemblage plat, qui
- relie les deux couches support l'une à et l'autre
- convient pour ouvrir l'assemblage dans les conditions d'un changement de rouleau statique ou volant,
- deux couches de masse adhésive qui sont à chaque fois disposées sur la surface opposée à l'élément d'assemblage de chaque couche support
où
- l'élément d'assemblage n'est pas une couche de masse adhésive, les couches massiques n'étant pas des couches de masse adhésive lorsqu'elles ne présentent pas de propriétés autoadhésives, c'est-à-dire pas de pégosité, à l'état séché,
- les assemblages entre l'élément d'assemblage et au moins une des couches support ne sont pas réalisés au moyen d'autres couches de masse adhésive, **caractérisé en ce que**
- l'élément d'assemblage
- comprend une couche polymère, qui peut être délaminée de la couche supérieure et/ou de la couche inférieure, le polymère pour la couche polymère étant choisi dans le groupe formé par les poly(chlorures de vinyle), le poly(chlorure de vinylidène), les poly(alcools vinyliques), les poly(acétates de vinyle), les polyvinylpyrrolidones, les copolymères de chlorure de vinyle et d'acétate de vinyle,
- au moins un des bords de délimitation de l'élément d'assemblage n'est pas linéaire,
- une ligne principale linéaire (ligne de sens principal) étant définie par rapport à ce bord de délimitation,
- la ligne principale de ce bord de délimitation s'étendant le long d'une direction préférentielle,
- ce bord de délimitation présentant une multitude de zones situées d'un côté de sa ligne principale ainsi qu'une multitude de zones situées de l'autre côté de sa ligne principale.

2. Système adhésif selon la revendication 1, **caractérisé en ce qu'**il se trouve sous forme d'une bande adhésive s'étendant dans le sens préférentiel.

3. Système adhésif selon l'une quelconque des revendications précédentes, **caractérisé en ce que** la couche polymère représente l'élément d'assemblage.

4. Système adhésif selon l'une quelconque des revendications précédentes, **caractérisé en ce que** l'élément d'assemblage se trouve sous forme d'une multitude d'éléments plats individuels.

5. Système adhésif selon l'une quelconque des revendications précédentes, **caractérisé en ce que** les lignes principales [lignes de direction principale] des deux bords longitudinaux (L₁, L₂) s'étendent au moins parallèlement et s'étendent dans le sens préférentiel.

6. Système adhésif selon l'une quelconque des revendications précédentes, **caractérisé en ce que** la ligne principale dudit au moins un bord de délimitation ne s'étendant pas de manière linéaire de l'élément d'assemblage présente une distance par rapport à l'autre ligne principale du bord de délimitation d'au moins une des couches support.

7. Système adhésif selon la revendication 6, **caractérisé en ce que** la distance est de 0,5 à 15 mm.

8. Système adhésif selon l'une quelconque des revendications précédentes, **caractérisé en ce qu'**une autre couche est prévue entre la couche polymère et la couche support, dont la couche polymère peut être délaminée.

9. Procédé pour assembler deux bandes plates pendant le changement volant de rouleaux de matériau en bande plate enroulé en rouleaux en utilisant un système adhésif selon l'une quelconque des revendications 1 à 8.

10. Bobine de bande adhésive comprenant un système adhésif selon l'une quelconque des revendications 1 à 8.
